# EUROPÄISCHE PATENTSCHRIFT

(11) **EP 3 440 771 B1**
(45) Veröffentlichungstag und Bekanntmachung des Hinweises auf die Patenterteilung: **14.09.2022**
(21) Anmeldenummer: 17709912.4
(22) Anmeldetag: 08.03.2017
(51) Int. Cl.: H02P 3/22, H02P 29/60, H02H 6/00, H02H 7/122, H02M 1/32

(54) **ANTRIEB, AUFWEISEND EINEN UMRICHTER UND EINEN VON DEM UMRICHTER GESPEISTEN ELEKTROMOTOR, UND VERFAHREN ZUM BETREIBEN DES ANTRIEBS**
DRIVE COMPRISING A CONVERTER AND AN ELECTRIC MOTOR POWERED BY THE CONVERTER, AND METHOD OF OPERATING THE DRIVE
ENTRAÎNEMENT COMPRENANT UN CONVERTISSEUR ET UN MOTEUR ÉLECTRIQUE ALIMENTÉ PAR LE CONVERTISSEUR, ET PROCÉDÉ POUR FAIRE FONCTIONNER L'ENTRAÎNEMENT

(30) Priorität: 08.04.2016 DE 102016004062
(43) Veröffentlichungstag der Anmeldung: 13.02.2019
(73) Patentinhaber: SEW-EURODRIVE GmbH & Co. KG, 76646 Bruchsal (DE)
(72) Erfinder: STARK, Marcel, 74909 Meckesheim (DE); HETTEL, Norbert, 76474 Au am Rhein (DE)
(74) Vertreter: Tüngler, Eberhard
(86) Internationale Anmeldenummer: PCT/EP2017/025041
(87) Internationale Veröffentlichungsnummer: WO 2017/174209

(56) Entgegenhaltungen:
- JP-A- H05 168 287
- US-A- 5 814 954
- US-A1- 2007 284 196

## Beschreibung

Die Erfindung betrifft einen Antrieb, aufweisend einen Umrichter und einen von dem Umrichter gespeisten Elektromotor, und ein Verfahren zum Betreiben eines Antriebs.

Es ist allgemein bekannt, dass ein Antrieb einen umrichtergespeisten Motor aufweist, wobei der Umrichter einen Gleichrichter und einen aus dem gleichspannungsseitigen Anschluss des Gleichrichters speisbaren Wechselrichter aufweist.

Aus der JP H05 168287 A ist als nächstkommender Stand der Technik ein Verfahren zur Detektion von Überlastung eines Wechselrichters bekannt.

Aus der US 5 814 954 A ist bekannt, am gleichspannungsseitigen Anschluss eines Wechselrichters eine Reihenschaltung eines regenerativen Widerstands und eines steuerbaren Schalters vorzusehen.

Aus der US 2007 / 284 196 A1 ist eine Hubeinrichtung mit Bremswiderstand bekannt.

Der Erfindung liegt daher die Aufgabe zugrunde, einen Antrieb weiterzubilden, wobei die Sicherheit, insbesondere Betriebssicherheit, erhöht werden soll.

Erfindungsgemäß wird die Aufgabe bei dem Antrieb nach den in Anspruch 1 und bei dem Verfahren nach den in Anspruch 4 angegebenen Merkmalen gelöst.

Von Vorteil ist dabei, dass bei Überschreiten einer kritischen Auslastung des Bremswiderstandes, also bei Überschreiten einer kritischen Temperatur, die Energiezufuhr an diesen trennbar ist.

Des Weiteren entfällt die Verdrahtung und Verwendung eines Bimetallschalters im Bremswiderstand zur thermischen Überwachung desselben. Von Vorteil ist dabei, dass ein Bremswiderstand auch ohne Bimetallschalter thermisch mittels eines Rechenmodells überwachbar ist. Dadurch verringert sich der Verdrahtungsaufwand und es sind einfachere, günstigere Bremswiderstände ohne Bimetallschalter verwendbar oder nicht eigensichere Bremswiderstände.

Erfindungsgemäß
weist der Widerstand einen Bremswiderstand auf,
wobei der Widerstand einen ersten Bremswiderstand aufweist, der innerhalb des Gehäuses des Umrichters angeordnet ist, und einen zweiten Bremswiderstand, der außerhalb des Gehäuses des Umrichters angeordnet ist,
wobei der erste und der zweite Bremswiderstand in Reihe oder parallel oder alternativ betreibbar sind. Von Vorteil ist dabei, dass der Bremswiderstand vom Motor generatorisch erzeugte Energie an die Umgebung als thermischen Wärmestrom abführt, wenn die Zwischenkreisspannung einen ersten Schwellwert überschreitet und somit die Schalter des Wechselrichters infolge zu hoher Zwischenkreisspannung gefährdet werden.

Erfindungsgemäß
überwacht das Vergleichsmittel den erfassten Spannungswert auf Überschreiten eines ersten Schwellwertes und Unterschreiten eines zweiten Schwellwertes,
wobei der zweite Schwellwert betragsmäßig kleiner ist als der erste Schwellwert,
wobei das Vergleichsmittel derart eingerichtet ist, dass bei Überschreiten des ersten Schwellwertes das Ausgangssignal den steuerbaren Halbleiterschalter derart ansteuert, dass dem Widerstand Strom zugeführt wird, und bei Unterschreiten des zweiten Schwellwertes das Ausgangssignal den steuerbaren Halbleiterschalter nach Ablauf einer Mindestschaltzeit derart ansteuert, dass kein Strom durch den Widerstand fließt. Von Vorteil ist dabei, dass bei Überschreiten des ersten Schwellwertes die Zwischenkreisspannung wieder reduziert wird, indem Energie dem Bremswiderstand zugeführt wird, also der steuerbare Halbleiterschalter geschlossen wird und somit die Stromzufuhr aus dem Zwischenkreis an den Widerstand frei gegeben wird. Bei Unterschreiten des zweiten Schwellwertes, der kleiner ist als der erste Schwellwert, wird die Stromzufuhr nach Ablauf einer Mindestschaltzeit beendet. Dadurch dass der erste und zweite Schwellwert verschieden voneinander sind, ist eine Hysterese bewirkt. Die Mindesteinschaltzeit verhindert ein zu hoch frequentes Ein-/Ausschalten des Halbleiters und reduziert somit die Schaltverlustleistung im Halbleiterschalter.

Erfindungsgemäß
weist das Auslastungsbestimmungsmittel einen Zähler auf, dessen Zählrichtung vom Wert der erfassten Spannung beziehungsweise von einem für den steuerbaren Halbleiterschalter vorgesehenen Ansteuersignal abhängt. In einer vorteilhaften Ausgestaltung ist
die Zählrichtung des Zählers, insbesondere also das Aufwärtszählen oder Abwärtszählen des Zählers, bei Überschreiten des ersten Schwellwertes positiv und bei Unterschreiten des zweiten Schwellwertes negativ ist, insbesondere wobei beim Aufwärtszählen eine betragsmäßig größere Zählgeschwindigkeit vorgesehen ist als eine von der Auslastung abhängige Zählgeschwindigkeit beim Abwärtszählen. Von Vorteil ist dabei, dass in sehr einfacher Weise ein Maß für die Temperatur bestimmbar ist. Dabei wird allerdings nicht der physikalisch korrekte exponentielle Temperaturverlauf bestimmt und/oder verwendet sondern nur lineare Temperaturverläufe werden bestimmt und/oder angewendet. Beim Ansteigen der Temperatur wird nur eine einzige Zählgeschwindigkeit verwendet, also nur ein einziger linearer Verlauf. Beim Abfallen der Temperatur werden mehrere lineare Verläufe, also verschiedenen Zählgeschwindigkeiten, verwendet. Dabei sinkt die Zählgeschwindigkeit mit der Temperatur monoton, aber nicht streng monoton. Jedem Temperaturbereich ist dabei seine Zählgeschwindigkeit eineindeutig zugeordnet. Die Zählgeschwindigkeit entspricht dem Takt am Eingang des Zählers. Der Zählerstand erhöht sich also pro Zeitspanne entsprechend der Zählgeschwindigkeit, wenn langfristig gemittelt wird und/oder die Zeitspanne ein ganzzahliges Vielfaches der Taktzeit ist.

Bei einer vorteilhaften Ausgestaltung ist das Auslastungsbestimmungsmittel derart eingerichtet, dass beim Abwärtszählen abhängig vom Signalwert, insbesondere also Auslastung oder Temperatur des Bremswiderstandes, eine jeweilige Zählgeschwindigkeit angewendet wird,
insbesondere wobei in einem ersten Wertebereich des Signalwertes eine erste Zählgeschwindigkeit und in einem zweiten Wertebereich des Signalwertes eine zweite Zählgeschwindigkeit angewendet wird,
insbesondere die erste Zählgeschwindigkeit betragsmäßig größer als die zweite Zählgeschwindigkeit ist,

insbesondere wobei die Signalwerte des zweiten Wertebereichs betragsmäßig größer als die Signalwerte des ersten Wertebereichs sind. Von Vorteil ist dabei, dass in besonders einfacher Weise ein Maß für die Temperatur bestimmbar ist, ohne dass eine Exponentialfunktion bestimmt werden müsste.

Erfindungsgemäß wird beim Aufwärtszählen nur eine einzige Zählgeschwindigkeit verwendet. Von Vorteil ist dabei, dass eine besonders einfache Bestimmung der Temperatur angewendet wird, die abweicht von der physikalisch korrekten Bestimmung, aber einen sehr geringen Aufwand zur Realisierung benötigt.

Erfindungsgemäß ist das Auslastungsbestimmungsmittel derart eingerichtet, dass beim Abwärtszählen abhängig vom Signalwert eine jeweilige Zählgeschwindigkeit vorgesehen ist,
wobei die jeweilige Zählgeschwindigkeit mit betragsmäßig abnehmenden Signalwerten betragsmäßig monoton abnimmt, insbesondere aber nicht streng monoton abnimmt. Von Vorteil ist dabei, dass bei kleinen Signalwerten langsamere Zählgeschwindigkeiten vorhanden sind als bei größeren. Somit ist der Temperaturverlauf in einfacher Weise nachbildbar, ohne dass besonders hohe Rechenkapazität bereit zu stellen ist.

Wichtige Merkmale bei dem Verfahren zum Betreiben eines insbesondere vorgenannten Antriebs sind, dass der Antrieb einen aus einem Zwischenkreis des Antriebs speisbaren Bremswiderstand aufweist,
wobei aus der erfassten Zwischenkreisspannung und/oder aus dem für den steuerbaren Halbleiterschalter vorgesehenen Ansteuersignal ein Auslastungsgrad bestimmt wird,
indem ein Zähler aufwärts zählend betrieben wird, wenn die erfasste Zwischenkreisspannung einen ersten Schwellwert überschreitet,
und indem der Zähler abwärts zählend betrieben wird, wenn die erfasste Zwischenkreisspannung einen zweiten Schwellwert unterschreitet,
wobei die Zählgeschwindigkeit beim abwärts zählenden Betrieb abhängt von dem Betrag des Wertes der erfassten Zwischenkreisspannung und/oder von der Auslastung des Bremswiderstandes,
wobei die jeweilige Zählgeschwindigkeit
   - mit betragsmäßig abnehmenden Werten der erfassten Zwischenkreisspannung-
   - und/oder mit betragsmäßig abnehmenden Werten der Temperatur oder Auslastung des Bremswiderstandes, welche beim Abschalten des steuerbaren Halbleiterschalters, also Unterschreiten des zweiten Schwellwertes, und nach Ablauf der Mindesteinschaltdauer ausgeschaltet wird,
betragsmäßig monoton abnimmt, aber nicht streng monoton abnimmt,
wobei bei Uberschreiten eines vorgegebenen Zählerstandes das Speisen des Bremswiderstandes aus dem Zwischenkreis beendet wird und/oder der Wechselrichter des Umrichters des Antriebs gesperrt wird und/oder die Schalter des Wechselrichters des Antriebs geöffnet werden oder hochohmig gemacht werden.

Von Vorteil ist dabei, dass ein Maß für die Temperatur des Bremswiderstandes in einfacher Weise bestimmbar ist und somit bei Überschreiten einer kritischen Temperatur der Umrichter in einen sicheren Zustand bringbar ist, beispielswiese indem keine weitere Energie an den Bremswiderstand geleitet wird und/oder die Schalter des Wechselrichters des Umrichters geöffnet werden.

Die Erfindung wird nun anhand von Abbildungen näher erläutert:

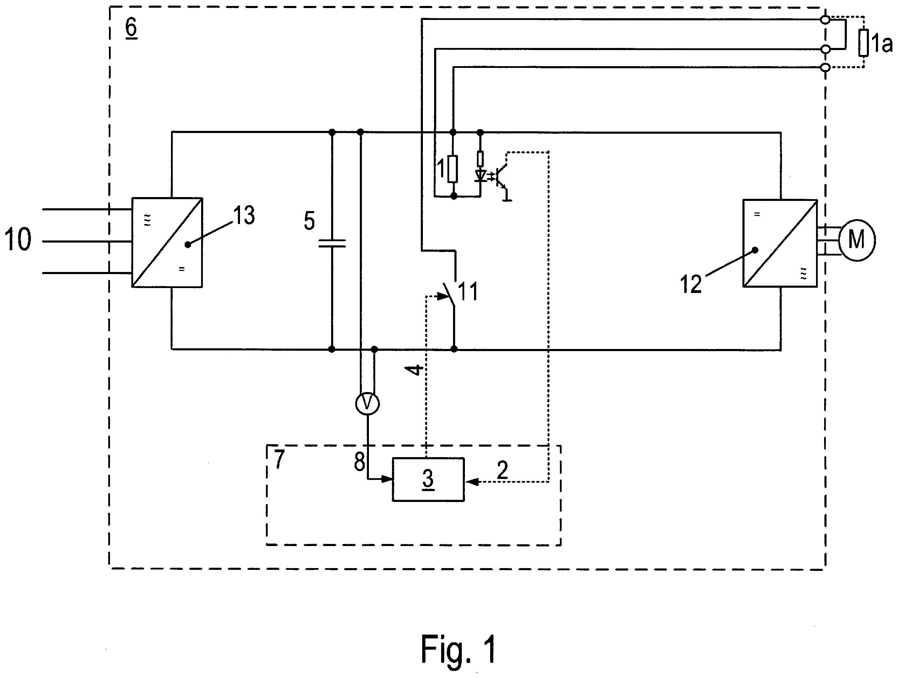

In der Figur 1 ist der Aufbau des Antriebs schematisch dargestellt.

Wie in Figur 1 gezeigt, weist der Antrieb einen umrichtergespeisten Elektromotor M auf, wobei der Umrichter 6 einen Gleichrichter 13 aufweist, der aus einem elektrischen Versorgungsnetz 10, insbesondere Drehstromnetz, versorgt ist. Ausgangsseitig stellt der Gleichrichter 13 eine unipolare Spannung, insbesondere Gleichspannung, zur Verfügung, die im Folgenden auch als Zwischenkreisspannung bezeichnet wird.

Aus der Zwischenkreisspannung wird der Wechselrichter 12 versorgt, dessen ausgangsseitige Spannung, also Wechselspannung, insbesondere Drehspannung, den Motor M speist.

Die Zwischenkreisspannung wird abgepuffert mit einem Zwischenkreiskondensator 5.

Aus der Zwischenkreisspannung wird eine Reihenschaltung versorgt, die aus einem steuerbaren Halbleiterschalter 11, insbesondere also Brems-Chopper, und zumindest einem Widerstand besteht. Dabei ist der Widerstand wahlweise als erster Bremswiderstand 1, welcher innerhalb des Gehäuses des Umrichters 6 angeordnet ist, oder als zweiter Bremswiderstand 1a, welcher außerhalb des Gehäuses des Umrichters 6, also extern, realisierbar. Hierzu ist eine Brücke entsprechend anzuordnen. Es ist auch eine Parallelschaltung oder Reihenschaltung des ersten und zweiten Bremswiderstandes ausführbar.

Parallel zum ersten Bremswiderstand 1 ist eine Leuchtdiode angeordnet, so dass mittels eines Fototransistors der Betrieb des Halbleiterschalters galvanisch getrennt überwachbar ist. Das vom Phototransistor erzeugte Spannungssignal wird als Rückmeldesignal 2 einer Steuerelektronik 3, die zum Erzeugen der Ansteuersignale für den Brems-Chopper 4 geeignet ausgeführt ist, zugeführt, die ein entsprechendes Ansteuersignal für den steuerbaren Halbleiterschalter 11, also für den Brems-Chopper, erzeugt. Zusätzlich ist auch eine Überwachung auf Verwendung des ersten oder zweiten Bremswiderstandes ausführbar (1, 1a). Vorzugsweise ist das Ansteuersignal 4. Pulsweitenmoduliert, wobei das Pulsweitenmodulationsverhältnis dem Aussteuerungsgrad entspricht.

Der von einem Spannungserfassungsmittel V erfasste Spannungswert 8 der Zwischenkreisspannung wird der Steuerelektronik 3 zugeführt - ebenso wie das Rückmeldesignal 2.

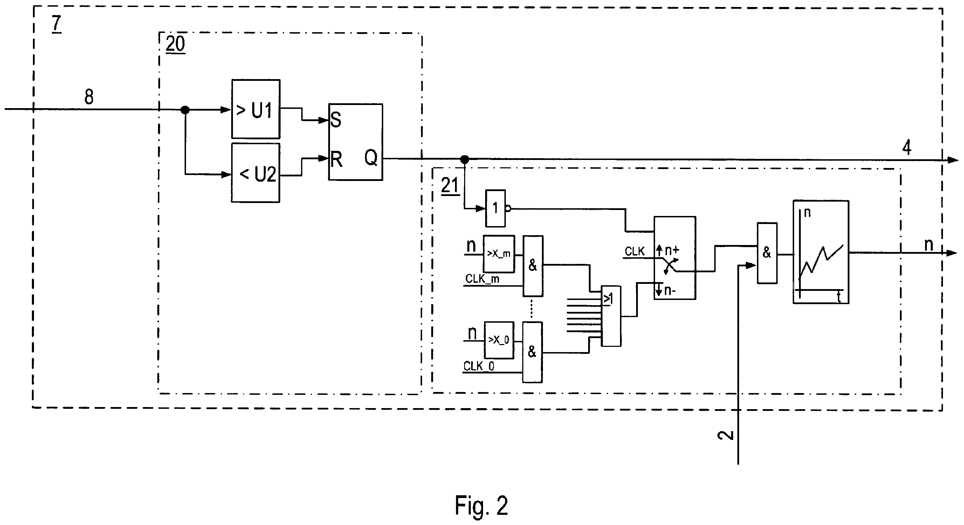

Wie in Figur 2 gezeigt, wird die Zwischenkreisspannung auf das Überschreiten oder Unterschreiten von Schwellwerten mittels eines Überwachungsmittels 20 überwacht. Übersteigt die Zwischenkreisspannung einen ersten Schwellwert U1 wird der steuerbare Halbleiterschalter 11 derart angesteuert, dass ein von der Zwischenkreisspannung getriebener Strom durch den Widerstand fließt und somit Leistung aus dem Zwischenkreis in Ohm'sche Wärme umgewandelt wird. Unterschreitet die Zwischenkreisspannung einen zweiten Schwellwert U2, welcher kleiner als der erste Schwellwert U1 ist, wird der steuerbare Halbleiterschalter 11 nach Ablauf einer Mindesteinschaltzeit geöffnet.

Somit wird die Zwischenkreisspannung auf einen Wert zwischen U1 und U2 hin geregelt - zumindest im generatorischen Betrieb.

Die Steuerelektronik 3 zum Erzeugen der Ansteuersignale 4 für den steuerbaren Halbleiterschalter, insbesondere Brems-Chopper, ist vorzugsweise als frei programmierbares Gate Array, also FPGA, oder als DSP ausgeführt. Somit ist die Steuerelektronik 3 besonders schnell und einfach bereitstellbar.

Mittels des in der Steuerelektronik 3 angeordneten Auslastungsbestimmungsmittels 21 wird die Auslastung bestimmt. Hierzu wird für die Zeitdauer des Abführens von Strom aus dem Zwischenkreis an den Widerstand ein Zähler aufwärts gezählt und ansonsten abwärts.

Der Zählerstand n ist somit ein Maß für den thermischen Auslastungsgrad, also ein Maß für die Temperatur des Bremswiderstands.

Beim Aufwärts-Zählen wird sehr viel schneller gezählt als beim Abwärts-Zählen, die Zählgeschwindigkeit n+ beim Aufwärtszählen ist also betragsmäßig größer als die Zählgeschwindigkeit n- beim Abwärtszählen. Hierzu ist in einer ersten Ausführung das Aufwärts-Zählen mit dem Systemtakt CLK ausgeführt. Da somit bei konstantem Auslastungsgrad das Maß für Temperatur linear mit der Zeit erhöht wird, liegt zwar eine Abweichung gegenüber einer im idealisierten Fall auftretenden Exponentialfunktion vor, jedoch wird nur der Temperaturbereich unterhalb der Drahtzerstörungsgrenze, also der Temperaturbereich, in welchem der Bremswiderstand verwendbar ist, durch die lineare Funktion angenähert.

Beim Abwärtszählen wird die im idealisierten Fall auftretende Exponentialfunktion nicht als eine einzige lineare Funktion genähert, sondern der gesamte Temperaturbereich, in welchem der Bremswiderstand verwendbar ist, in mehrere, jeweils aneinander angrenzende Temperaturbereiche aufgeteilt. Jedem dieser einzelnen Temperaturbereiche ist eine jeweilige Zählgeschwindigkeit n- zugeordnet, wobei diese Zählgeschwindigkeit n- jedoch mit fallender Temperatur abnehmen, insbesondere monoton. Dem tiefsten Temperaturbereich ist somit die langsamste Zählgeschwindigkeit n- beim Abwärtszählen zugeordnet.

Die Temperaturbereiche sind dabei in einfacher Weise dadurch gebildet, dass der Auslastungsgrad in beispielshaft zehn Bereiche eingeteilt ist. Im Beispiel sind vorteiligerweise Stufen von 10% gebildet, also ein erster Bereich von 0 bis 10%, ein zweiter Bereich von 10% bis 20%, ein dritter Bereich von 20% bis 30% und so weiter bis zu einem letzten Bereich von 90% bis 100%. Bei Überschreiten von 100% ist die Funktion des Bremswiderstands nicht garantiert und ein Versagen wahrscheinlich, also beispielsweise durch Drahtbruch oder dergleichen.

Wie in Figur 2 gezeigt wird die dem jeweiligen Bereich zugeordnete Abwärtszählgeschwindigkeit n- im Auslastungsbestimmungsmittel 21 bestimmt. Hierzu wird der Auslastungsgrad n verglichen mit den die Bereiche kennzeichnenden Schwellwerten X_0 bis X_m, wobei jedem Bereich eine langsamere Zählgeschwindigkeit n- zugeordnet ist, indem ein jeweils entsprechend herabgeteilter Systemtakt CLK_0 bis CLK_m zugeführt wird.

Der Auslastungsgrad n steht als Ausgangssignal nur dann zur Verfügung, wenn auch ein Freigabesignal 2 vorliegt, insbesondere bei Verwendung eines ersten Bremswiderstands 1. Ansonsten liegt ein Fehlerzustand vor.

Die Erfindung bezieht sich also auf einen Antrieb, aufweisend einen von einem Umrichter gespeisten Elektromotor, wobei der Umrichter einen Wechselrichter, der einen gleichspannungsseitigen Anschluss und einen wechselspannungsseitigen Anschluss aufweist,
wobei aus dem gleichspannungsseitigen Anschluss, insbesondere also Zwischenkreisspannungsanschluss, eine Reihenschaltung gespeist ist und aus dem wechselspannungsseitigen Anschluss der Motor,
wobei die Reihenschaltung einen Widerstand aufweist und einen steuerbaren Halbleiterschalter, insbesondere zum Steuern des durch die Reihenschaltung fließenden Stroms,
wobei die am gleichspannungsseitigen Anschluss des Wechselrichters zur Verfügung stehende Spannung, insbesondere Zwischenkreisspannung, erfasst wird,
**wobei** ein Vergleichsmittel ein Ausgangssignal erzeugt, das den steuerbaren Halbleiterschalter ansteuert,
wobei einem Auslastungsbestimmungsmittel das Ausgangssignal ebenfalls zugeführt wird und das Auslastungsbestimmungsmittel daraus einen Signalwert bestimmt, insbesondere der als Maß für die Temperatur des Widerstands verwendbar ist.
insbesondere wobei der Signalwert einem zweiten Vergleichsmittel zugeführt wird, der bei Überschreiten eines Schwellwertes dem Wechselrichter ein Abschaltsignal zuführt, welches ein Öffnen der jeweiligen mit dem wechselspannungsseitigen Anschluss elektrisch verbundenen Schalter des Wechselrichters bewirkt.

Bei einem weiteren erfindungsgemäßen Ausführungsbeispiel sind nicht zehn Temperaturbereiche sondern eine andere Anzahl von Temperaturbereichen, beispielsweise zwischen fünf und fünfzehn.

### Bezugszeichenliste

1 erster Bremswiderstand, intern, also innerhalb des Gehäuses des Umrichters des Antriebs
1a zweiter Bremswiderstand, optional
2 Binäres Rückmeldesignal
3 Steuerelektronik zum Erzeugen der Ansteuersignale für den Brems-Chopper
4 Ansteuersignal für den Brems-Chopper, insbesondere pulsweitenmoduliert
5 Zwischenkreiskondensator
6 Umrichter
7 FPGA
8 erfasster Zwischenkreisspannungswert
10 elektrisches Versorgungsnetz, insbesondere Drehstromnetz
11 steuerbarer Halbleiterschalter, insbesondere Brems-Chopper
12 Wechselrichter
13 Gleichrichter
20 Überwachungsmittel zur Überwachung der Spannung
21 Auslastungsbestimmungsmittel zur Bestimmung der thermischen Auslastung

## Patentansprüche

1. Antrieb, aufweisend **einen Umrichter (6) und** einen von dem Umrichter (6) gespeisten Elektromotor,
wobei der Umrichter (6) einen Wechselrichter (12), der einen gleichspannungsseitigen Anschluss und einen wechselspannungsseitigen Anschluss aufweist, **und eine Reihenschaltung** (1, 1a, 11) **aufweist, wobei die Reihenschaltung**
aus dem gleichspannungsseitigen Anschluss, also Zwischenkreisspannungsanschluss, gespeist ist und aus dem wechselspannungsseitigen Anschluss der Motor,
wobei die Reihenschaltung einen Widerstand (1, 1a) aufweist und einen steuerbaren Halbleiterschalter (11), zum Steuern des durch die Reihenschaltung fließenden Stroms **aufweist,**
wobei die am gleichspannungsseitigen Anschluss des Wechselrichters (12) zur Verfügung stehende Spannung (8), insbesondere Zwischenkreisspannung, erfasst wird,
wobei ein Vergleichsmittel ein Ausgangssignal (4) erzeugt, das den steuerbaren Halbleiterschalter (11) ansteuert,
wobei einem Auslastungsbestimmungsmittel (21) das Ausgangssignal ebenfalls zugeführt
wird und das Auslastungsbestimmungsmittel (21) daraus einen Signalwert (n) bestimmt,
der als Maß für die Temperatur des Widerstands verwendbar ist.
wobei der Signalwert einem zweiten Vergleichsmittel zugeführt wird, das bei Überschreiten eines Schwellwertes dem Wechselrichter (12) ein Abschaltsignal zuführt, welches ein Öffnen der jeweiligen mit dem wechselspannungsseitigen Anschluss elektrisch verbundenen Schalter des Wechselrichters (12) bewirkt,
**wobei der Widerstand einen** ersten **Bremswiderstand (1) aufweist, dadurch gekennzeichnet, dass**
**der** der erste Bremswiederstand (1) **innerhalb des Gehäuses des Umrichters (6) angeordnet ist,** und der Widerstand einen zweiten Bremswiderstand (1a) aufweist,
**der außerhalb des Gehäuses des Umrichters (6) angeordnet ist, wobei der erste und der zweite Bremswiderstand** (1, 1a) **in Reihe oder parallelgeschaltet sind,**
**wobei das Vergleichsmittel den erfassten Spannungswert** (8) **auf Überschreiten eines ersten Schwellwertes** (U1) **und Unterschreiten eines zweiten Schwellwertes** (U2) **überwacht,**
wobei der zweite Schwellwert betragsmäßig kleiner ist als der erste Schwellwert,
wobei das Vergleichsmittel derart eingerichtet ist, dass bei Überschreiten des ersten Schwellwertes das Ausgangssignal den steuerbaren Halbleiterschalter (11) derart ansteuert, dass dem Widerstand Strom zugeführt wird, und bei Unterschreiten des zweiten Schwellwertes das Ausgangssignal den steuerbaren Halbleiterschalter (11) derart ansteuert, dass nach Ablauf einer zusätzlichen Mindesteinschaltzeit kein Strom durch den Widerstand mehr fließt,
wobei das Auslastungsbestimmungsmittel (21) einen Zähler aufweist, dessen Zählrichtung vom Wert der erfassten Spannung und/oder vom für den steuerbaren Halbleiterschalter (11) vorgesehenen Ansteuersignal (4), insbesondere also von dem Ausgangssignal, abhängt,
wobei das Auslastungsbestimmungsmittel (21) derart eingerichtet ist, dass beim Aufwärtszählen nur eine einzige Zählgeschwindigkeit verwendet wird, und beim Abwärtszählen abhängig vom Signalwert eine jeweilige Zählgeschwindigkeit vorgesehen ist,
wobei die jeweilige Zählgeschwindigkeit mit betragsmäßig abnehmenden Signalwerten betragsmäßig monoton abnimmt, wobei die Zählgeschwindigkeit über begrenzte Bereiche von Signalwerten konstant ist.

2. Antrieb nach Anspruch 1, **dadurch gekennzeichnet, dass** die Zählrichtung des Zählers bei Überschreiten des ersten Schwellwertes positiv, insbesondere also ein Aufwärtszählen, und bei Unterschreiten des zweiten Schwellwertes negativ, insbesondere also ein Abwärtszählen, ist, insbesondere wobei beim Aufwärtszählen eine betragsmäßig größere Zählgeschwindigkeit vorgesehen ist als beim Abwärtszählen.

3. Antrieb nach mindestens einem der vorangegangenen Ansprüche,
**dadurch gekennzeichnet, dass**
das Auslastungsbestimmungsmittel (21) derart eingerichtet ist, dass beim Abwärtszählen abhängig vom Signalwert eine jeweilige Zählgeschwindigkeit angewendet wird,
insbesondere wobei in einem ersten Wertebereich des Signalwertes eine erste Zählgeschwindigkeit und in einem zweiten Wertebereich des Signalwertes eine zweite Zählgeschwindigkeit angewendet wird,
insbesondere die erste Zählgeschwindigkeit betragsmäßig größer als die zweite Zählgeschwindigkeit ist,
insbesondere wobei die Signalwerte des **ersten** Wertebereichs betragsmäßig größer als die Signalwerte des **zweien** Wertebereichs sind.

4. Verfahren zum Betreiben eines Antriebs nach mindestens einem der vorangegangenen Ansprüche,
wobei der Antrieb einen aus einem Zwischenkreis des Antriebs speisbaren Bremswiderstand (1) aufweist,
**dadurch gekennzeichnet, dass**
aus der erfassten Zwischenkreisspannung und/oder aus dem Ansteuersignal (4) für einen steuerbaren Halbleiterschalter (11), der zum Steuern des Stroms im Bremswiderstand (1) vorgesehen ist, ein Auslastungsgrad bestimmt wird,
indem ein Zähler aufwärts zählend betrieben wird, wenn die erfasste Zwischenkreisspannung einen ersten Schwellwert überschreitet,
und indem der Zähler abwärts zählend betrieben wird, wenn die erfasste Zwischenkreisspannung einen zweiten Schwellwert unterschreitet,
wobei die Zählgeschwindigkeit beim abwärts zählenden Betrieb abhängt von dem Betrag des Wertes der erfassten Zwischenkreisspannung und/oder der thermischen Auslastung,
wobei die jeweilige Zählgeschwindigkeit mit betragsmäßig abnehmenden Werten der erfassten Zwischenkreisspannung und/oder der thermischen Auslastung betragsmäßig monoton abnimmt, aber nicht streng monoton abnimmt,
wobei bei Überschreiten eines vorgegebenen Zählerstandes das Speisen des Bremswiderstandes (1) aus dem Zwischenkreis beendet wird und/oder der Wechselrichter (12) des Umrichters (6) des Antriebs gesperrt wird und/oder die Schalter des Wechselrichters (12) des Antriebs geöffnet werden.

## Claims

1. A drive, having a converter (6) and an electric motor fed by the converter (6),
wherein the converter (6) has an inverter (12), which has a connection at the DC side and a connection at the AC side, and a series connection (1, 1a, 11), wherein the series connection is fed from the connection at the DC side, therefore intermediate circuit voltage connection, and the motor is fed from the connection at the AC side,
wherein the series connection has a resistor (1, 1a) and a controllable semiconductor switch (11), for controlling the current flowing through the series connection,
wherein the voltage (8), in particular intermediate circuit voltage, available at the inverter (12) at its connection at the DC side is detected,
wherein a comparison means generates an output signal (4) which controls the controllable semiconductor switch (11),
wherein the output signal is likewise supplied to a load determination means (21) and the latter determines therefrom a signal value (n) which can be used as a measure for the temperature of the resistor,
wherein the signal value is supplied to a second comparison means which, when a threshold value is exceeded, supplies a switch-off signal to the inverter (12), which signal effects an opening of the respective switch, electrically connected to the connection at the AC side, of the inverter (12),
wherein the resistor has a first braking resistor (1),
**characterised in that**
the first braking resistor (1) is arranged within the housing of the converter (6) and the resistor has a second braking resistor (1a) which is arranged outside of the housing of the converter (6), wherein the first and the second braking resistor (1, 1a) are connected in series or in parallel, wherein the comparison means monitors the detected voltage value (8) for exceeding a first threshold value (U1) and falling below a second threshold value (U2),
wherein the second threshold value is smaller in amount than the first threshold value, wherein the comparison means is configured such that, when the first threshold value is exceeded, the output signal controls the controllable semiconductor switch (11) in such a manner that current is supplied to the resistor and that, when there is a fall below the second threshold value, the output signal controls the controllable semiconductor switch (11) in such a manner that current no longer flows through the resistor after an additional minimum switch-on time has expired,
wherein the load determination means (21) has a counter whose counting direction depends on the value of the detected voltage and/or on the control signal (4) provided for the controllable semiconductor switch (11), in particular therefore on the output signal,
wherein the load determination means (21) is configured in such a manner that only a single counting speed is used upon upwards counting and dependent on the signal value a respective counting speed is provided upon downwards counting,
wherein the respective counting speed monotonically decreases in amount as the signal values decrease in amount, wherein the counting speed is constant over limited ranges of signal values.

2. A drive according to claim 1,
**characterised in that**
the counting direction of the counter is positive when the first threshold value is exceeded, in particular therefore an upwards counting, and is negative when there is a fall below the second threshold value, in particular therefore a downwards counting, in particular wherein a counting speed of greater amount is provided upon upwards counting than upon downwards counting.

3. A drive according to at least one of the preceding claims,
**characterised in that**
the load determination means (21) is configured in such a manner that a respective counting speed is used upon downwards counting, dependent on the signal value,
in particular wherein a first counting speed is used in a first value range of the signal value and a second counting speed is used in a second value range of the signal value,
in particular the first counting speed is greater in amount than the second counting speed, in particular wherein the signal values of the first value range are greater in amount than the signal values of the second value range.

4. A method of operating a drive according to at least one of the preceding claims,
wherein the drive has a braking resistor (1) able to be supplied from an intermediate circuit of the drive,
**characterised in that**
a degree of load is determined from the detected intermediate circuit voltage and/or from the control signal (4) for a controllable semiconductor switch (11) provided to control the current in the braking resistor (1),
**in that** a counter is operated in an upwards counting manner when the detected intermediate circuit voltage exceeds a first threshold value,
and **in that** the counter is operated in a downwards counting manner when the determined intermediate circuit voltage falls below a second threshold value,
wherein the counting speed upon downwards counting operation depends on the amount of the value of the detected intermediate circuit voltage and/or of the thermal load,
wherein the respective counting speed monotonically decreases in amount, but not strictly monotonically, as the value amounts of the detected intermediate circuit voltage and/or of the thermal load decrease,
wherein the supplying of the braking resistor (1) from the intermediate circuit is ended when a predetermined counter level is exceeded and/or the inverter (12) of the converter (6) of the drive is blocked and/or the switches of the inverter (12) of the drive are opened.

## Revendications

1. Entraînement présentant un variateur (6) et un moteur électrique alimenté par le variateur (6),
dans lequel le variateur (6) présente un onduleur (12) qui présente une borne côté courant continu et une borne côté courant alternatif, et un circuit série (1, 1a, 11),
dans lequel le circuit série est alimenté à partir de la borne côté courant continu, c'est-à-dire la borne de tension de circuit intermédiaire, et le moteur à partir de la borne côté courant alternatif,
dans lequel le circuit série présente une résistance (1, 1a) et un commutateur à semi-conducteur commandable (11) pour commander le courant circulant à travers le circuit série,
dans lequel la tension (8) disponible à la borne côté tension continue de l'onduleur (12), en particulier la tension de circuit intermédiaire, est détectée, dans lequel un moyen de comparaison génère un signal de sortie (4) qui commande le commutateur à semi-conducteur commandable (11),
dans lequel le signal de sortie est également amené à un moyen de détermination de charge (21) et le moyen de détermination de charge (21) détermine à partir de celui-ci une valeur de signal (n) qui peut être utilisée comme mesure de la température de la résistance,
dans lequel la valeur de signal est amenée à un deuxième moyen de comparaison qui, en cas de dépassement d'une valeur seuil, amène à l'onduleur (12) un signal de coupure qui provoque une ouverture des commutateurs respectifs de l'onduleur (12) reliés électriquement à la borne côté tension alternative,
dans lequel la résistance présente une première résistance de freinage (1), **caractérisé en ce que**
la première résistance de freinage (1) est disposée à l'intérieur du boîtier de l'onduleur (6) et la résistance présente une deuxième résistance de freinage (1a) qui est disposée à l'extérieur du boîtier de l'onduleur (6),
dans lequel la première et la deuxième résistance de freinage (1, 1a) sont connectées en série ou en parallèle,
dans lequel le moyen de comparaison surveille la valeur de tension détectée (8) pour savoir si elle dépasse une première valeur seuil (U1) et si elle passe en dessous d'une deuxième valeur seuil (U2),
dans lequel la deuxième valeur seuil est inférieure en valeur absolue à la première valeur seuil,
dans lequel le moyen de comparaison est conçu de telle sorte que, en cas de dépassement de la première valeur seuil, le signal de sortie commande le commutateur à semi-conducteur commandable (11) de telle sorte que du courant est amené à la résistance et, en cas de passage en dessous de la deuxième valeur seuil, le signal de sortie commande le commutateur à semi-conducteur commandable (11) de telle sorte qu'aucun courant ne circule plus à travers la résistance après écoulement d'un temps d'enclenchement minimal supplémentaire,
dans lequel le moyen de détermination de charge (21) présente un compteur dont le sens de comptage dépend de la valeur de la tension détectée et/ou du signal de commande (4) prévu pour le commutateur à semi-conducteur commandable (11), donc en particulier du signal de sortie,
dans lequel le moyen de détermination de charge (21) est conçu de telle sorte que, lors du comptage ascendant, seule une vitesse de comptage unique est utilisée et que, lors du comptage descendant, une vitesse de comptage respective est prévue en fonction de la valeur de signal,
dans lequel la vitesse de comptage respective diminue de manière monotone en valeur absolue avec des valeurs de signal décroissantes en valeur absolue, la vitesse de comptage étant constante sur des plages limitées de valeurs de signal.

2. Entraînement selon la revendication 1,
**caractérisé en ce que**
le sens de comptage du compteur est positif, correspondant donc en particulier à un comptage ascendant, en cas de dépassement de la première valeur seuil et négatif, correspondant donc en particulier à un comptage descendant, en cas de passage en dessous de la deuxième valeur seuil, en particulier dans lequel une vitesse de comptage plus grande en valeur absolue est prévue pour le comptage ascendant que pour le comptage descendant.

3. Entraînement selon au moins l'une des revendications précédentes,
**caractérisé en ce que**
le moyen de détermination de charge (21) est conçu de telle sorte que, lors du comptage descendant, une vitesse de comptage respective est appliquée en fonction de la valeur de signal,
en particulier dans lequel une première vitesse de comptage est appliquée dans une première plage de valeurs de la valeur de signal et une deuxième vitesse de comptage est appliquée dans une deuxième plage de valeurs de la valeur de signal,
en particulier dans lequel la première vitesse de comptage est supérieure en valeur absolue à la deuxième vitesse de comptage,
en particulier dans lequel les valeurs de signal de la première plage de valeurs sont supérieures en valeur absolue aux valeurs de signal de la deuxième plage de valeurs.

4. Procédé de fonctionnement d'un entraînement selon au moins l'une des revendications précédentes,
dans lequel l'entraînement présente une résistance de freinage (1) pouvant être alimentée à partir d'un circuit intermédiaire de l'entraînement,
**caractérisé en ce que**
un facteur de charge est déterminé à partir de la tension de circuit intermédiaire détectée et/ou à partir du signal de commande (4) pour un commutateur à semi-conducteur commandable (11) qui est prévu pour commander le courant dans la résistance de freinage (1),
en faisant fonctionner un compteur en comptage ascendant lorsque la tension de circuit intermédiaire détectée dépasse une première valeur seuil,
et en faisant fonctionner le compteur en comptage descendant lorsque la tension de circuit intermédiaire détectée passe en dessous d'une deuxième valeur seuil,
dans lequel la vitesse de comptage en fonctionnement en comptage descendant dépend de la valeur absolue de la tension de circuit intermédiaire détectée et/ou de la charge thermique,
dans lequel la vitesse de comptage respective diminue de manière monotone en valeur absolue avec des valeurs décroissantes en valeur absolue de la tension de circuit intermédiaire détectée et/ou de la charge thermique, mais ne diminue pas de manière strictement monotone,
dans lequel l'alimentation de la résistance de freinage (1) à partir du circuit intermédiaire est arrêtée et/ou l'onduleur (12) du variateur (6) de l'entraînement est bloqué et/ou les commutateurs de l'onduleur (12) de l'entraînement sont ouverts en cas de dépassement d'une valeur de comptage prédéfinie.
